# EUROPEAN PATENT SPECIFICATION

(11) **EP 0 841 546 B1**
(45) Date of publication and mention of the grant of the patent: **26.03.2003**
(21) Application number: 97308887.5
(22) Date of filing: 05.11.1997
(51) Int. Cl.: G01F 15/075, G01F 15/06, G01K 17/12

(54) **System for monitoring water consuming structures and their heat use in an individual unit of a multi-unit building and a system for billing therefor**
System zur Überwachung von Wasser verbrauchenden Strukturen und deren Wärmeverbrauch in einer Einheit oder in einem mehrere Einheiten enthaltenden Gebäude, und dazugehöriges Abrechnungssystem
Système de surveillance de structures consommatrices d'eau et de leur consommation de chaleur dans une unité ou un bâtiment comprenant plusieurs unités, et système de tarification s'y rapportant

(30) Priority: 08.11.1996 US 745329; 08.11.1996 US 745330; 08.11.1996 US 745300; 08.11.1996 US 746398
(43) Date of publication of application: 13.05.1998
(60) Divisional application: 02077285.1
(73) Proprietor: Saar, David A., Titusville, New Jersey 08560 (US)
(72) Inventor: Saar, David A., Titusville, New Jersey 08560 (US)
(74) Representative: Warren, Anthony Robert

(56) References cited:
- WO-A-96/06408
- DE-A- 4 235 187
- DE-A- 19 523 666
- GB-A- 2 050 660
- US-A- 4 083 241
- US-A- 4 940 976

## Description

The present invention relates to a system for monitoring the water consumption and energy use of water consuming devices and monitoring the energy use of water operated heating and cooling devices in multi-unit building complexes where the individual units are supplied water from a common source and more particularly to a system which will calculate the water consumption and water related energy use of the individual units so that water, sewer and energy costs can be fairly apportioned to the units to encourage conservation. The invention also relates to monitoring unusual water usage to detect leaks and open valves.

The individual units of a multi-unit building such as an apartment building are supplied water from a common source (the outlet of the building water meter). The water inlet is split into hot and cold water lines with the hot water line passing through a heater (typically there are separate hot water and heating boilers) which heat the water to the required temperature. In conventional construction, multiple vertical risers supply stacked bathrooms, kitchens and heating/cooling devices. As a result the water supplied to an individual unit can not be metered without substantial, very costly, plumbing infrastructure changes.

**WO-A-9606408** discloses a system which meters energy consumption in a heat delivery system. The system comprises a number of heating stations arranged in an apartment building, and includes individual inlet and outlet meters for each heating station connected to a common local processor. The energy consumption of the station is calculated over a period of time by measuring the flow rate of heated water through the station and the temperature differential between the input and output. Input and output flow rates may also measured. Flow rate measurement is achieved by use of acoustic flowmeters. Flow rate and temperature differential data from the local processor is transmitted to a central station, together with station identification signals.

**DE-A-4235187** discloses a system for monitoring the consumption of heat or water. Consumption measuring devices based on temperature variation monitoring associated with each radiator are in radio communication with a local receiver which signals to a remote central processor. The measuring devices generally send information at different times. Identification signals can be sent with consumption data signals.

**GB-A-2050660** discloses a turbine flowmeter, providing a volumetric rate of flow output. This is used in calculating heat quantity transported in a time interval.

**US-A-4083241** relates to a common line transmission system for permitting signals from a plurality of flowmeters to be transmitted over a common line, the signals from the various meters being allocated a respective different modulation frequency.

**US-A-4940976** describes a system in which devices are attached to existing water meters to generate signals for transmission to a remote central station representing instantaneous and totalised flow. The transmitted signals include identification of the meter. The system generates a warning of excessive use or possible leaks in the system.

The present invention relates to a system for monitoring the use of heat energy in water devices in an individual unit of a multi-unit building, of the general type disclosed in **WO-A-9606408**.

It is an object of the present invention to provide a system which is capable of measuring the water consumption and water heat energy use in an individual unit in a multi-unit building so that the individual unit can be assigned responsibility therefor without substantial plumbing infrastructure changes.

It is another object, of one embodiment of the present invention, to provide a system which is capable of monitoring the condition of a water consuming structure so that leaks can be serviced and erroneously open lines can be closed.

According to the present invention, there is provided a system for monitoring the use of heat energy in water devices in an individual unit of a multi-unit building, as defined in claim 1.

Referring to the accompanying drawings:
Figure 1 is a schematic illustration of the water consuming devices of a four unit apartment building wherein each unit has a bathroom with a sink (including any associated tub/shower) and a toilet and a kitchen with a sink (including associated appliances such as a dishwasher) and wherein each pipe supplying the water consuming devices includes a monitor made in accordance with the teachings of the present invention;
Figure 2 is a schematic illustration of the heating/cooling system for the same apartment building wherein each apartment has one or more heating/cooling devices each having upstream and downstream monitors, both monitoring temperature and volumetric flow;
Figure 3 is a schematic illustration of a monitor shown in Figures 1 and 2;
Figure 4 is a logic diagram for the volume/temperature functions of a monitor;
Figure 5 is a logic diagram for a monitor which will issue an alarm signal when the water using device is continuously open;
Figure 6 is a schematic illustration of a system for a multi story building including a receiver on each floor for receiving and outputting data from the monitors on its floor;
Figure 7 is a logic diagram for a monitor which will issue a maintenance signal when a water device is leaking;
Figure 8 is a schematic illustration for a home system;
Figure 9 is a logic diagram for comparing the output of a common monitor with the outputs of all the dedicated monitors to identify a leak;
Figure 10 is a schematic illustration of a system for a building that has a plurality of local receivers that are hard wired in series, with one of the local receivers being a base local receiver for outputting all the data;
Figure 11 is a schematic illustration of a system similar to that of Figure 6, with some of the individual local receivers hard wired or phone linked in parallel to another of the local receivers which serves as a base local receiver;
Figure 12 is a schematic illustration of a system having a plurality of local receivers linked in series or in parallel to a remote receiver; and
Figure 13 is a schematic illustration of a system having a plurality of local and remote receivers which are linked to a data base.

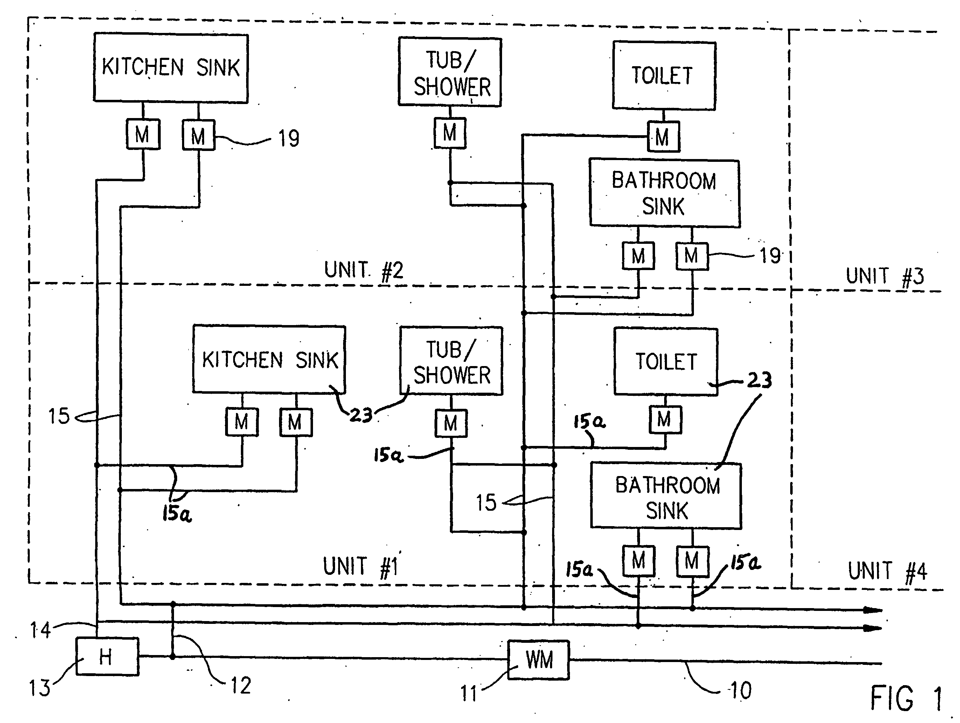

Utility provided water 10 (Fig. 1) generally is metered by a water meter **WM 11** as it enters a building such as an apartment house or office building. A portion of the water branches off to supply the building cold water supply line **12** and the other portion is supplied to a hot water heater **H 13** which supplies the hot water supply line **14** of the building. The building has a number of similar apartment units (in a two story apartment house, there could be four one bedroom apartments, two on each floor, for example) each having a plurality of water consuming devices **23** comprising a sink (including associated tub/shower) and toilet in the powder room and a second sink (including any associated appliances such as a dishwasher) in the kitchen. Each sink is supplied by separate hot and cold water lines (the hot and cold water lines of the kitchen sink may also supply a dishwasher) and each toilet is supplied by a single cold water line. Stacked kitchens and bathrooms are supplied via vertical risers **15**. In each water feed line **15a** to each device **23** (or just downstream of the tub/shower in the mixed water feed line 15a) is located a monitor **M 19**.

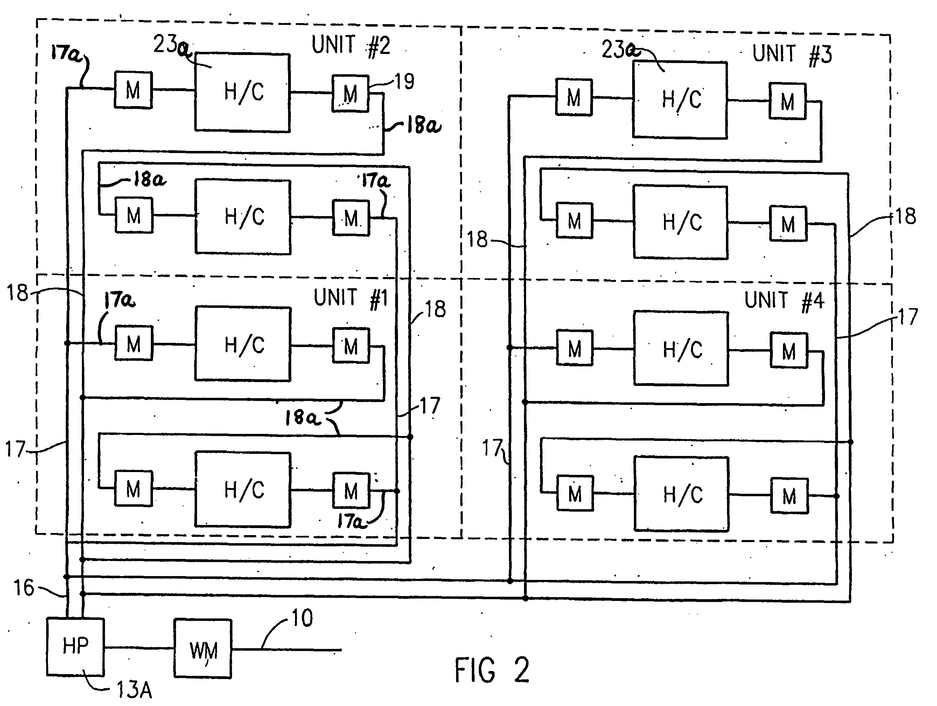

Figure 2 shows the heating/cooling system for the same apartment units. Water (hot in the winter or cold in the summer) is supplied by a suitable source such as a heat pump **HP 13A** (discrete sources such as a boiler for hot water and a chiller for cold water could be utilized) to a feed line **16** which supplies the individual heating or cooling units **H/C 23a** through individual feed lines **17a** connected to multiple vertical risers **17**. The water is returned to the source HP by individual return lines **18a** connected to suitable return lines 18. Located upstream and downstream of each heating or cooling unit **H/C** in each line **17a**, **18a** is a monitor **M**.

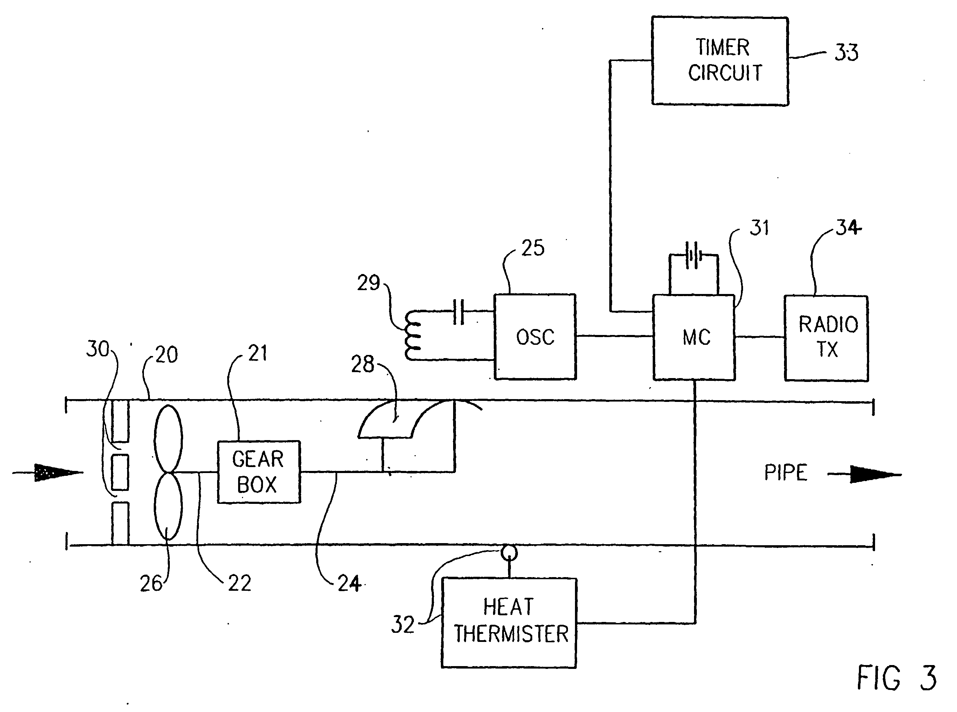

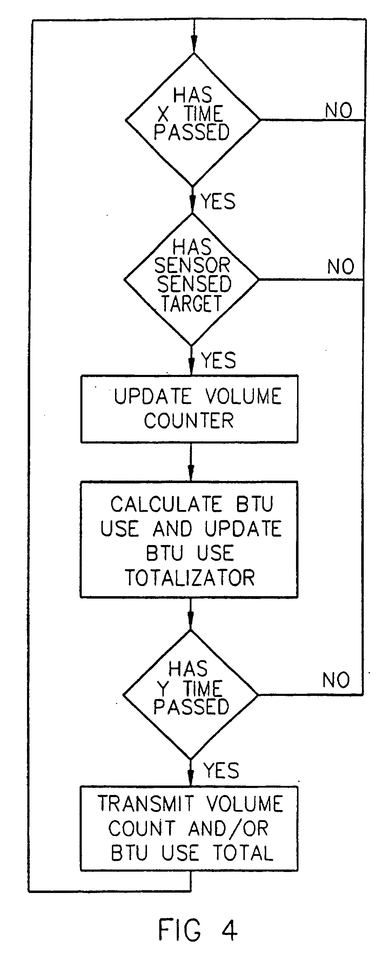

A monitor **M** (Fig. 3) which can be located in each line by a plumber, is a unitary battery operated structure, which is fully sealed to reduce tampering and water damage. The monitor can have a universal set of fittings to simplify installation. A monitor may include a pipe **20** in which may be permanently secured a gearbox **2**1 such as the type found in lawn sprinkler heads to control the movement of the water spray. The gear box has axial input **22** and output **24** shafts which are connected to a turbine wheel drive propeller **26** and a copper or other metal axially extending partial cylindrical portion paddle wheel **28**. Water entering the pipe, passes through a set of orifices **30** which direct the water at the propeller blades thereby efficiently driving the gearbox. The gear ratio of the gearbox is selected so that the partial cylindrical portion **28** will make no more than about half a rotation during a sampling time (a rate of rotation that will assure that an oscillator (**OSC - 25**) will sense the presence of the partial cylindrical portion (the target) **2**8 twice each revolution). The gear ratio may be different for different devices (full flow for a toilet is very different than full flow for a tub, for example). Coil **29** will change inductance twice each revolution changing the frequency of the oscillator. A first processor comprising a microprocessor **MC - 31** or custom specialized electronic circuit forming part of the monitor can therefore count a pulse each time the target **28** is located at **0°** and **180°**, and each pulse equates to a unit volume of liquid. Referring to Figure 4, if a reading is to be taken approximately once per "**X**" time (a minute, for example) based on a timer circuit 33 associated with the microprocessor (see Figure 3), the gear ratio will be selected so that the target will rotate less than **180°**, during one minute with maximum flow through the pipe. Alternately, other sensors could be used such as a rotating magnet and Hall effect sensor, reed switch, capacitive sensor, optical sensor, inductive sensor with ferrite rotator, etc. When, during that time interval, the target has been sensed, a volume counter will be updated to a new total of volume units and at some other regular time interval "y" (once a day, for example), the total volume count will be transmitted by the radio transmitter 34. The updated count is representative of the total volumetric flow through the pipe. Limiting the rate of rotation of the target with the gear box so that a reading need only be taken once per minute, prolongs battery life since the microprocessor **MC - 31** only has to be turned on once per minute. The flow measuring system could also be an ultrasonic Doppler flowmeter, a magnetic flowmeter, an electronic mass flowmeter, or a vortex flowmeter, for example.

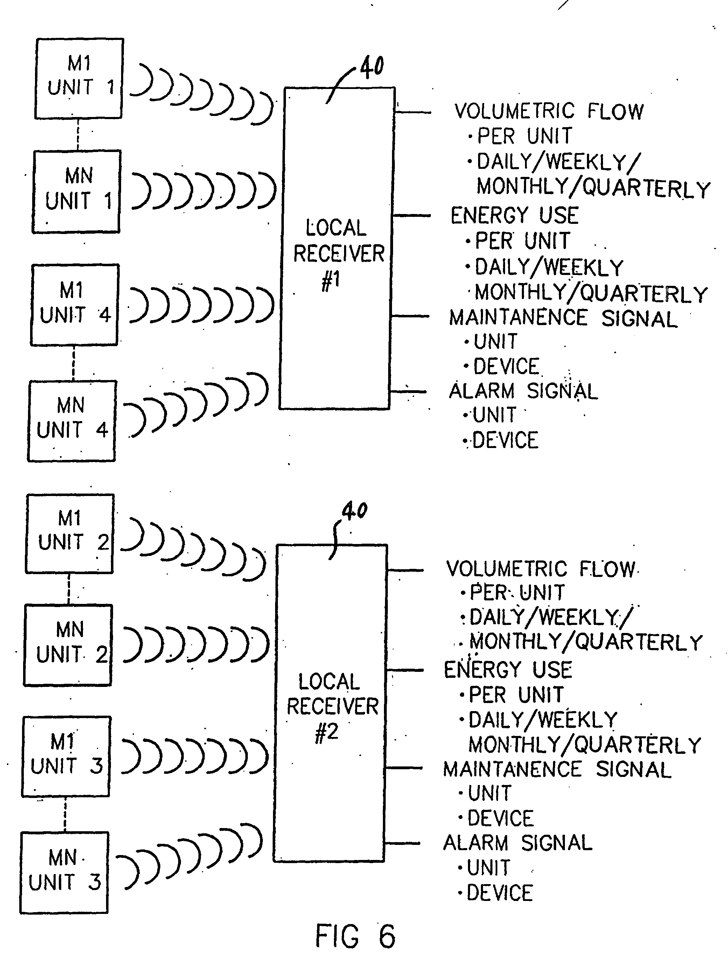

The energy use of the hot water used in a water using device (Figure 1) is computed by multiplying the units of volume which have flowed through the associated hot water pipe by the temperature that hot water is supplied where the monitor is receiving hot water from the hot water heater. For this purpose, the monitor includes a heat thermistor 32 (or a thermocouple, etc.) attached to the pipe to sense the temperature of the water flowing through the monitor. The microprocessor **MC - 31** multiplies the temperature by the units of volumetric flow to define a heat content number (BTU use - Figure 4) and will then update the total heat content totalizator of the microprocessor. By subtracting the total heat count at one side of a heating/cooling unit **H/C** (Figure 2) from the simultaneous total heat count at the other side (the subtraction made by a local receiver 40, which is remote from the monitors and receives the data from both monitors - Figure 6, for example), the energy use, i.e. consumption, of the heating/cooling unit can be determined. Should electrical power be available or should the battery economics permit, the position of the target could be sampled continuously and the gear box would not be required.

Once every day (or some other time interval) which equates to "**Y**" time interval, the microprocessor will operate the transmitter (which is a radio transmitter **34** in the preferred embodiment but could be an ultra sonic or infrared transmitter, etc.) to transmit the then current count of the register which is representative of volumetric flow, the then current total of the heat content totalizator, identifier data which identifies the apartment unit, the water using device, etc. and any pulse count data used to chronologically locate the transmission.

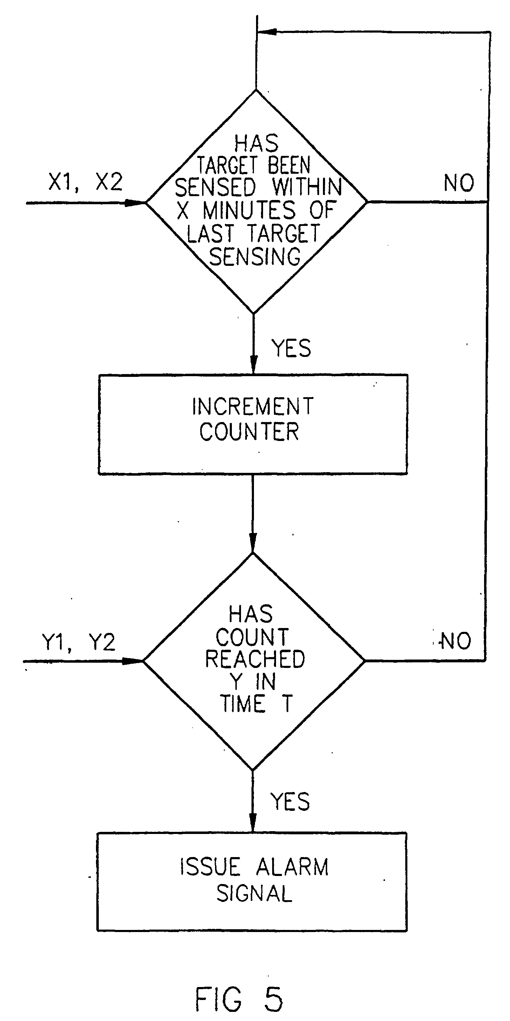

The microprocessor **MC - 31** can also determine that a water consuming device has been left open (a tub running continuously, for example). For example, the microprocessor should detect the presence of the target once a minute while the tub is being filled at the fully open condition. Even at a slow fill rate the target should be sensed once every "**X**" minutes (Figure **5**). If "**X**" is five minutes, for example, the filling process should be complete within twenty minutes (four multiples of "**X**"). Accordingly, according to the algorithm expressed in Figure 5, when the water has been running for "**X**" minutes and the target has been sensed, the counter is incremented and the process is repeated. When the target has been sensed in the next "**X**" minutes the counter again increments and so forth. If the count reaches **15** ("**Y**"), for example, the water has run for a time beyond that which was required to fill the tub and this can mean that someone has failed to turn the water off, etc. Should the microprocessor determine that flow has continued for more "**Y**" increments of "**X**", the microprocessor will direct the transmitter to transmit an alarm signal, identifying the water consuming device, to the receiver which indicates that the device has been left open so that immediate action can be taken to correct the problem. The alarm signal can be transmitted to a local receiver which could be a general alarm system for the home which would announce the condition, or it could be further transmitted to a remote receiver which could be at a home security company which could take appropriate action, or it could be a part of the water usage system for a multiple unit building as described herein. This algorithm can also be computed with a number of "**X**" and "**Y**" values ("**X1**" and "**Y1**", "**X2**" and "**Y2**", for example) since the fill rate can be chosen at widely different rates. These variables can also be defined during installation by programming non volatile memory in the monitor.

In the apartment building illustrated in Figures **1** and **2**, a radio (local) receiver **40** (incorporating a further processor comprising a microprocessor, for example) which can receive and decode the transmitted radio signal can be located on each floor (Figure **6**), remote from, and for receiving the data transmitted from, all of the monitors on its floor. As shown in Figure **6**, the local receiver **40** may compute daily, weekly, monthly, quarterly, etc., totals for the volumetric flow and energy (BTU) use, i.e. consumption, for each unit, and can issue alarm signals (by audible alarm or telephone to a security location, for example) identifying the unit and the water consuming device subject to the alarm signal. Each receiver could, for example, have a visual readout or it could be connectable to a hand held terminal which can read out the data. By transmitting volumetric flow data from the monitors to the receiver each day, the receiver can determine that a monitor is not operating which could indicate that the monitor battery has died, etc., or that the monitor has been tampered with.

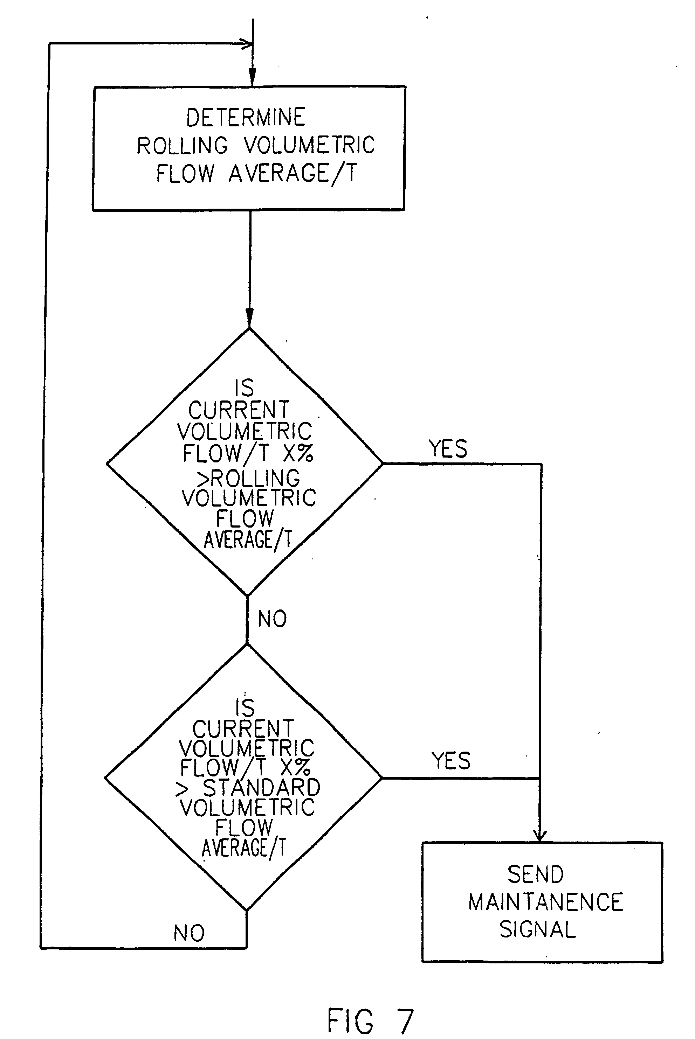

The local receiver may also implement the algorithm disclosed in Figure 7. It can determine a rolling volumetric flow average/unit of time ("T" may be 30 or 60 days for example) and first compare that with the calculated current volumetric flow/unit of time. Where it exceeds the rolling average by **X%** which indicates that a faucet is leaking, for example, the local receiver will send a maintenance signal. A second comparison can also be made to determine whether the current volumetric flow/unit of time exceeds by Y% a standard for that device. Should the difference exceed this variance, the local receiver will issue a maintenance signal.

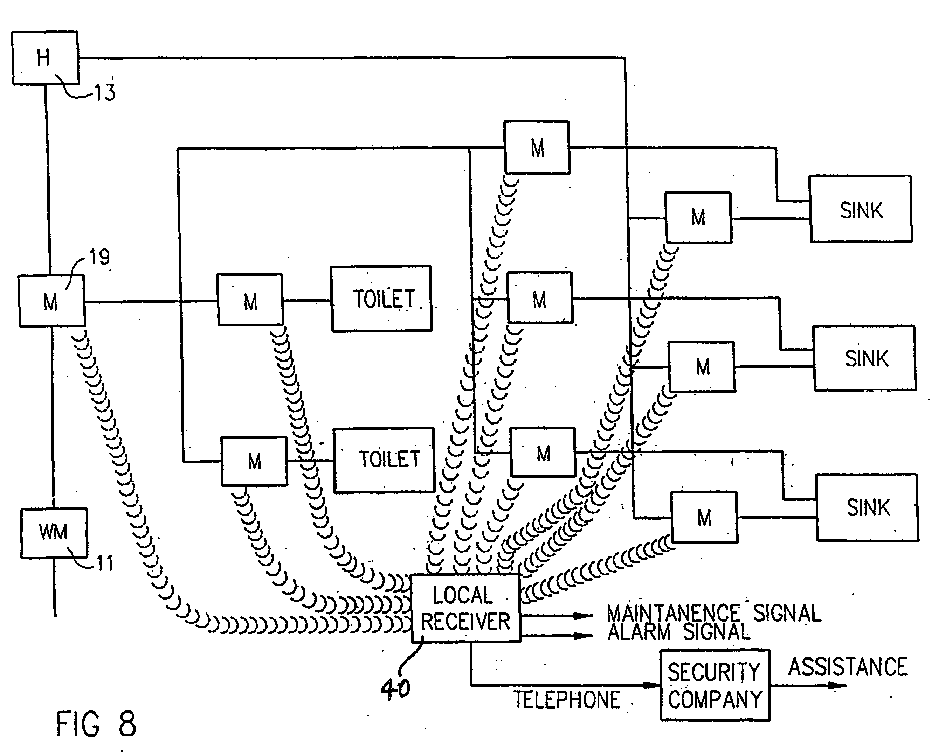

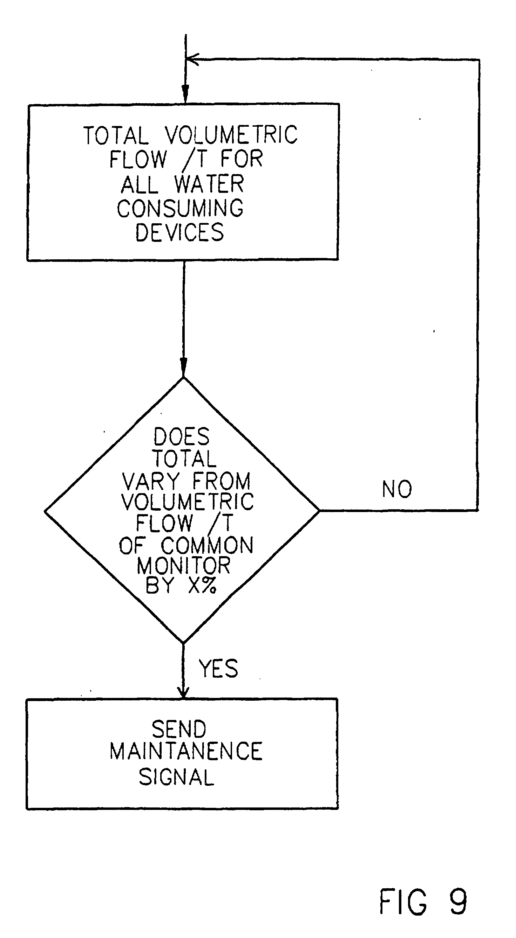

The receiver, in its simplest form, could contain an information system (or a part of a larger information system) for an individual unit or a home (Figure 8). A monitor, which would not have to monitor temperature, could be placed in each line supplying the water consuming devices so that volumetric flow data could be transmitted to a local receiver which would determine whether any device was leaking or open and would issue an appropriate alarm or maintenance signal for that device. This Figure also illustrates such a monitor 19 downstream of the water meter **WM - 11**. This monitor can implement the algorithm of Figure 5 to detect a break in any downstream water line such as could happen as a result of earthquake or freeze damage, for example. By comparing the volumetric flow/unit of time of this common monitor (Figure 9), with the total volumetric flow/unit of time of all the dedicated monitors, an internal leak can be identified (a variance of **X%** would indicate an internal leak). Maintenance and alarm signals can be issued by the local receiver and optionally the local receiver can communicate with a remote receiver in the form of a security company or to the monitoring or billing system to obtain assistance.

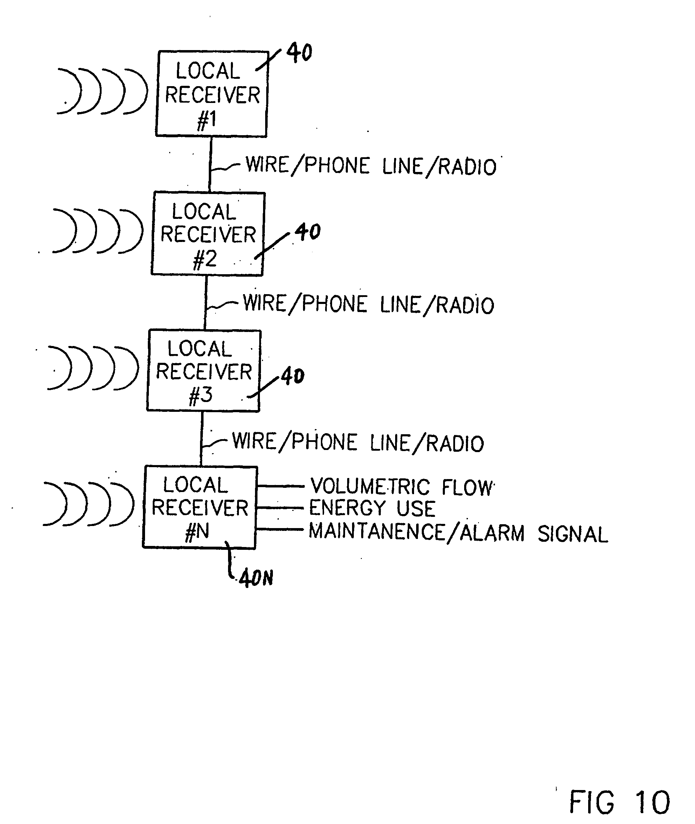

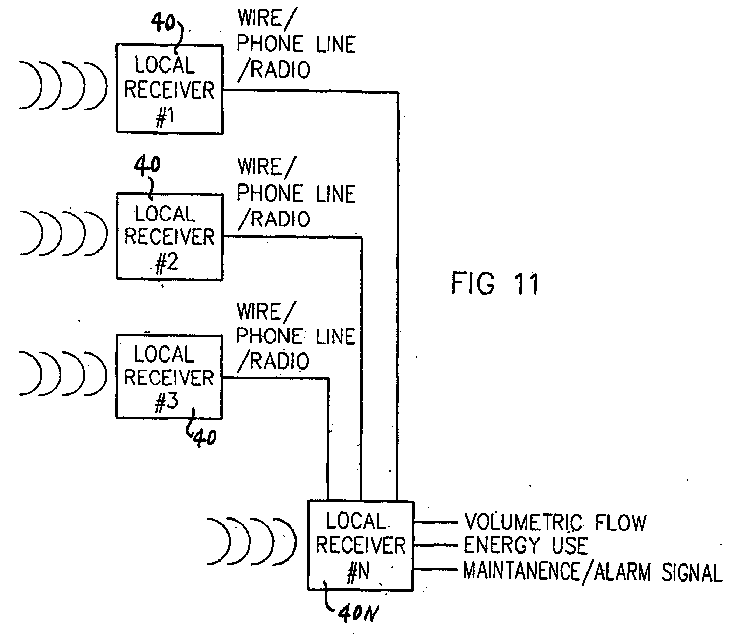

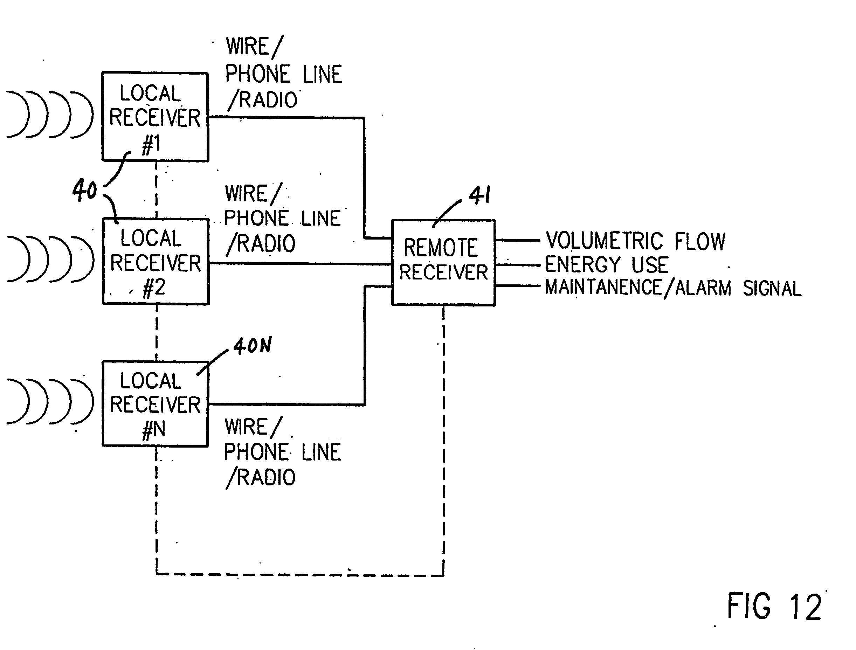

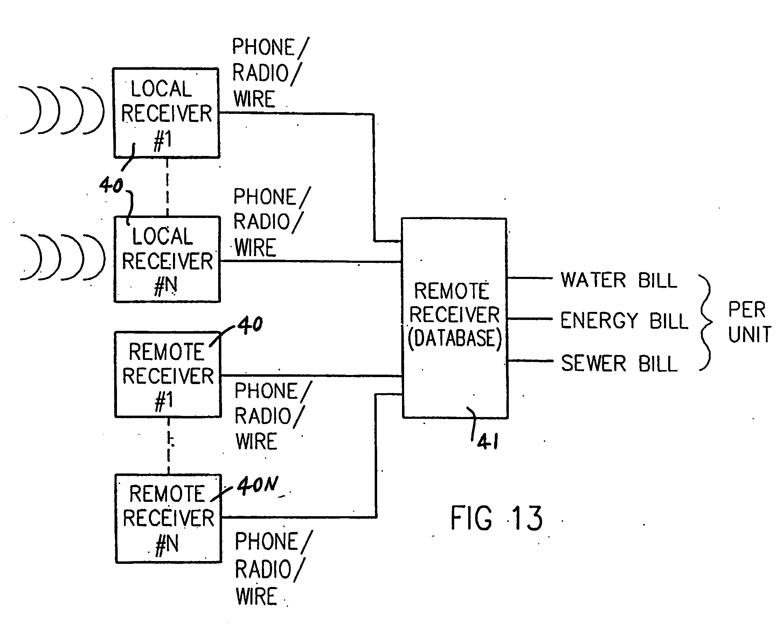

As shown in Figure **10**, the multi-unit building may have a plurality of local receivers **40** hard wired in series (or connected on a phone line) to a base local receiver **40N** (the local receiver located on the superintendents' floor for example), with the base local receiver presenting the data for all the local receivers. Instead of phone lines or wires, a radio (custom or **PCS** system) could transmit the data from one local receiver to other local/remote receivers. The total volumetric flow, and energy use, i.e. consumption, for an individual unit can be computed from the counts periodically transmitted by the associated monitors, either by each of the local receivers, or all computations can be performed by the base local receiver **40N**. Alternately, such a base local receiver **40N** can be connected in parallel with the other local receivers (Figure 11). The base receiver may not receive data from a monitor but only receive data from local receivers (receivers receiving data from monitors in Figure 12). The base receiver is then a remote receiver. The remote receiver (Figure 13) can provide a database which communicates via phone lines with any number of local and/or remote receivers and a receiver (a local receiver, a base local receiver or a remote receiver) can operate on the data and prepare bills for water, energy and sewer use for each reporting unit which can be sent directly to the individual units or to the buildings for distribution as well as support reporting of leaks and open faucets, etc.

## Claims

1. A system for monitoring the use of heat energy in water devices in an individual unit of a multi-unit building wherein the multi-unit building is supplied with water from a common source (**10**) and the individual unit of the building has a plurality of energy consuming water devices (**23**; **23a**) each supplied by water feed pipe (**15a**; **17a**) supplied from said common source (**10**), comprising:
a monitor (**19/M**) connected to the feed pipe (**15a**; **17a**) of each water device (**23**; **23a**), each monitor comprising a unitary structure which incorporates its own flowmeter (**24**, **26**, **28**, **29**), temperature sensor (**32**), first processor means (**31**), timer (**33**) and transmitter (**34**),
the flowmeter (**24**, **26**, **28**, **29**) being arranged to measure the volumetric flow through the associated feed pipe (**15a**; **17a**) and provide a count of the successive volumetric units that have flowed through the feed pipe,
the temperature sensor (**32**) being arranged to measure the temperature of the successive volumetric units that have flowed through that feed pipe,
the first processor means (**31**) being arranged to compute, by multiplication of the measured volumetric flow by the measured temperature , the heat energy content of each of the successive volumetric units,
the transmitter (**34**) being arranged to transmit, periodically under the control of the timer (**33**), data processed by the first processor means (**31**) comprising the total of the computed heat energy content of the successive volumetric units together with device identification data,
the system further comprising receiver means (**40**; **40N**; **41**) remote from the monitors and arranged to receive the periodically transmitted data, and including further processor means arranged to compute, from the data received from the monitors, the total heat energy consumed by the water devices (**23**; **23a**) of the individual unit of the building over a selected period of time.

2. A system according to claim 1, wherein said plurality of energy consuming water devices includes at least one hot water consuming device (**23**) supplied by a hot water feed pipe (**15a**) with a monitor (**19/M**) connected thereto.

3. A system according to claim 1 or 2, wherein said plurality of energy consuming water devices includes heating or cooling devices (**23a**) each having, in addition to a water feed pipe (**17a**) and a monitor (**19/M**) connected thereto, a water return pipe (**18a**) having another said monitor (**19/M**) connected thereto, and wherein said receiver means (**40**, **40N**) is arranged to compute a total heat energy consumption for each heating or cooling device (**23a**) by subtracting the total heat energy content data from one of said monitors from the total heat energy content data from the other of said monitors.

4. A system according to claim 3, wherein said receiver means comprises
a first receiver (**40**) arranged to receive the total heat energy content data from each of said monitors of each heating or cooling device (**23a**) and periodically retransmit heat energy data, and
a second receiver (**40N**; **41**) arranged to receive the heat energy data from said first receiver (**40**), and present the total heat energy consumption of the heating or cooling devices (**23a**) for the individual unit of the building.

5. A system according to claim **4**, wherein said first receiver (**40**, **40N**) includes said further processor means arranged to calculate the total heat energy consumption of the heating or cooling devices (**23a**) for the individual unit of the building for said selected period of time, and said total heat energy consumption for the individual unit of the building comprises the heat energy data transmitted from said first remote receiver (**40**, **40N**) to said second receiver (**41**).

6. A system according to claim **4**, wherein said second receiver (**41**) includes said further processor means arranged to calculate the total heat energy consumption of the heating or cooling devices (**23a**) for the individual unit of the building for said selected period of time, and said total heat energy content data for each monitor comprises the heat energy content data transmitted from said first remote receiver (**40**, **40N**) to said second remote receiver (**41**).

7. A system according to any preceding claim, further comprising means arranged to compute a charge for the total heat energy consumed by the water devices (**23**; **23a**) of the individual unit of the building.

8. A system according to claim **7**, further comprising means arranged to prepare a bill to the individual unit of the building for said total heat energy consumption charge.

9. A system according to claim **8**, further comprising means arranged to forward said bill to the individual unit of the building for said total heat energy consumption charge.

10. A system according to claim **4** in combination with claim **9**, wherein said second receiver (**40N**, **41**) is arranged to compute said heat energy consumption charge and to prepare and forward said bill to the individual unit of the building for said total heat energy consumption charge.

11. A system according to any preceding claim, wherein the plurality of energy consuming water devices includes at least one water consuming device (**23**) supplied by a water feed pipe (**15a**), and wherein:
the first processor means (**31**) is arranged to determine that volumetric flow through the pipe (**15a**) has been continuous during a predetermined period of time, selected to be greater than a period of time during which water should be flowing continuously through said pipe, and
the transmitter (**34**) is arranged to transmit an alarm signal in the event that. it is determined that flow to said water consuming device (**23**) has been continuous for said predetermined time.

12. A system according to any preceding claim, wherein the plurality of energy consuming water devices includes at least one water consuming device (**23**) supplied by a water feed pipe (**15a**), and wherein:
the first processor means (**31**) is arranged to determine the current volumetric flow through the pipe (**15a**) during a predetermined period of time, and to compare the determined volumetric flow for said predetermined period of time with a reference volumetric flow for said same predetermined period of time, and
said transmitter (**34**) is arranged to transmit a maintenance signal in the event that said determined current volumetric flow during said predetermined period of time exceeds said reference volumetric flow for said same predetermined period of time by a selected amount.

13. A system according to claim **12**, wherein said reference volumetric flow is a rolling volumetric flow average.

14. A system according to claim **12**, wherein said reference volumetric flow is a standard volumetric flow average.

15. A system according to any of claims **11** to **14**, wherein the receiver means (**40**, **40N**; **41**) is arranged to receive said signal and present the signal, so that corrective action can be taken.

16. A system according to claim **15**, wherein said receiver means comprises
a first receiver (**40**, **40N**) arranged to receive and retransmit the signal, and
a second receiver (**41**) arranged to receive the retransmitted signal from said first remote receiver and present said signal, so that corrective action can be taken.

17. A system according to any preceding claim, wherein said transmitter (**34**) comprises an RF transmitter.

18. A system according to claim **16**, in combination with claim **17**,
wherein said first receiver (**40**, **40N**) comprises
an RF receiver arranged to receive the signal transmitted from said transmitter (**34**), and
a telephone arranged to retransmit the signal, and
wherein said second receiver (**41**) comprises a telephone receiver.

## Patentansprüche

1. System zum Überwachen der Verwendung von Wärmeenergie in Wassereinrichtungen in einer einzelnen Einheit eines Gebäudes mit mehreren Einheiten, wobei das Gebäude mit mehreren Einheiten aus einer gemeinschaftlichen Quelle (10) mit Wasser versorgt wird und wobei die einzelne Einheit des Gebäudes eine Vielzahl von energieverbrauchenden Wassereinrichtungen (23; 23a) aufweist, von denen jede aus einem Wasserspeiserohr (15a; 17a) versorgt wird, das aus der gemeinschaftlichen Quelle (10) versorgt wird, mit:
einer Überwachungsvorrichtung (19/M), die mit dem Speiserohr (15a; 17a) von jeder Wassereinrichtung (23; 23a) verbunden ist, wobei jede Überwachungsvorrichtung eine einheitliche Struktur aufweist, die ihren eigenen Wasserzähler (24, 26, 28, 29), eigenen Temperatursensor (32), eigene erste Prozessormittel (31), eigenen Zeitgeber (33) und eigenen Sender (34) aufweist,
wobei der Wasserzähler (24, 26, 28, 29) dazu ausgelegt ist, den Volumenstrom durch das zugeordnete Speiserohr (15a; 17a) hindurch zu messen und einen Zählstand der aufeinanderfolgenden volumetrischen Einheiten bereitzustellen, die durch das Speiserohr geströmt sind,
wobei der Temperatursensor (32) dazu ausgelegt ist, die Temperatur der aufeinanderfolgenden volumetrischen Einheiten zu messen, die durch jenes Speiserohr geströmt sind,
wobei die ersten Prozessormittel (31) dazu ausgelegt sind, durch Multiplikation des gemessenen Volumenstroms mit der gemessenen Temperatur den Wärmeenergiegehalt von jeder der aufeinanderfolgenden volumetrischen Einheiten zu berechnen,
wobei der Sender (34) dazu ausgelegt ist, gesteuert von dem Zeitgeber (33), periodisch Daten zu senden, die von den ersten Prozessormitteln (31) verarbeitet sind, wobei die Daten die Summe des berechneten Wärmeenergiegehalts der aufeinanderfolgenden volumetrischen Einheiten zusammen mit Vorrichtungs-Identifikationsdaten aufweisen,
wobei das System ferner Empfängermittel (40; 40N; 41) aufweist, die entfernt von den Überwachungsvorrichtungen angeordnet und dazu ausgelegt sind, die periodisch gesendeten Daten zu empfangen, wobei die Empfängermittel (40; 40N; 41) ferner Prozessormittel aufweisen, die dazu ausgelegt sind, aus den von den Überwachungsvorrichtungen empfangenen Daten die Gesamtwärmeenergie zu berechnen, die von den Wassereinrichtungen (23; 23A) der einzelnen Einheit des Gebäudes über eine ausgewählte Zeitspanne verbraucht wird.

2. System nach Anspruch 1, wobei die Vielzahl von energieverbrauchenden Wassereinrichtungen wenigstens eine heißwasserverbrauchende Einrichtung (23) aufweisen, die aus einem Heißwasserspeiserohr (15a) versorgt wird, wobei eine Überwachungsvorrichtung (19/M) damit verbunden ist.

3. System nach Anspruch 1 oder 2, wobei die Vielzahl von energieverbrauchenden Wassereinrichtungen Heiz- oder Kühleinrichtungen (23a) aufweisen, die jeweils zusätzlich zu einem Wasserspeiserohr (17a) und einer damit verbundenen Überwachungsvorrichtung (19/M) ein Wasserrückflussrohr (18a) aufweisen, das mit einer weiteren Überwachungsvorrichtung (19/M) verbunden ist, und wobei die Empfängermittel (40, 40N) dazu ausgelegt sind, für jede Heiz- oder Kühleinrichtung (23a) einen Gesamt-Wärmeenergieverbrauch zu berechnen, indem die Gesamt-Wärmeenergiegehaltdaten von einer der Überwachungsvorrichtungen von den Gesamt-Wärmeenergiegehaltdaten von den anderen Überwachungsvorrichtungen subtrahiert werden.

4. System nach Anspruch 3, wobei die Empfängermittel aufweisen:
einen ersten Empfänger (40), der dazu ausgelegt ist, die Gesamt-Wärmeenergiegehaltdaten von jeder der Überwachungsvorrichtungen von jeder Heiz- oder Kühleinrichtung (32a) zu empfangen und periodisch Wärmeenergiedaten neu zu senden, und
einen zweiten Empfänger (40N; 41), der dazu ausgelegt ist, die Wärmeenergiedaten von dem ersten Empfänger (40) zu empfangen und den Gesamt-Wärmeenergieverbrauch der Heiz- oder Kühleinrichtungen (23a) für die einzelne Einheit des Gebäudes bereitzustellen.

5. System nach Anspruch 4, wobei der erste Empfänger (40, 40N) weitere Prozessormittel aufweist, die dazu ausgelegt sind, den Gesamt-Wärmeenergieverbrauch der Heiz- oder Kühleinrichtungen (23a) für die einzelne Einheit des Gebäudes für die ausgewählte Zeitspanne zu berechnen, und wobei der Gesamt-Wärmeenergieverbrauch für die einzelne Einheit des Gebäudes die Wärmenergiedaten beinhaltet, die von dem ersten entfernten Empfänger (40, 40N) an den zweiten Empfänger (41) gesendet worden sind.

6. System nach Anspruch 4, wobei der zweite Empfänger (41) die weiteren Prozessormittel aufweist, die dazu ausgelegt sind, den Gesamt-Wärmeenergieverbrauch der Heiz- oder Kühleinrichtungen (23a) für die einzelne Einheit des Gebäudes für die ausgewählte Zeitspanne zu berechnen, und wobei die Gesamt-Wärmeenergiegehaltdaten für jede Überwachungsvorrichtung die Wärmeenergiegehaltdaten aufweisen, die von dem ersten entfernten Empfänger (40, 40N) an den zweiten entfernten Empfänger (41) gesendet worden sind.

7. System nach einem der vorhergehenden Ansprüche, ferner mit Mitteln, die dazu ausgelegt sind, die Kosten für die Gesamt-Wärmeenergie zu berechnen, die von den Wassereinrichtungen (23; 23a) der einzelnen Einheit des Gebäudes verbraucht worden ist.

8. System nach Anspruch 7, ferner mit Mitteln, die dazu ausgelegt sind, für die einzelne Einheit des Gebäudes für die Kosten des Gesamt-Wärmeenergieverbrauchs eine Rechnung zu erstellen.

9. System nach Anspruch 8, ferner mit Mitteln, die dazu ausgelegt sind, die Rechnung über die Kosten für den Gesamt-Wärmeenergieverbrauch an die einzelne Einheit des Gebäudes weiterzuleiten.

10. System nach Anspruch 4 in Kombination mit Anspruch 9,
wobei der zweite Empfänger (40N, 41) dazu ausgelegt ist, die Kosten des Wärmeenergieverbrauchs zu berechnen und die Rechnung über die Kosten des Gesamt-Wärmeenergieverbrauchs für die einzelne Einheit des Gebäudes zu erstellen und an diese weiterzuleiten.

11. System nach einem der vorhergehenden Ansprüche, wobei die Vielzahl von energieverbrauchenden Wassereinrichtungen wenigstens eine wasserverbrauchende Einrichtung (23) aufweist, die von einem Wasserspeiserohr (15a) versorgt wird, und wobei
die ersten Prozessormittel (31) dazu ausgelegt sind, jenen Volumenstrom durch das Rohr (15a) zu bestimmen, der während einer vorbestimmten Zeitspanne kontinuierlich erfolgt ist, die so ausgewählt ist, dass sie größer ist als eine Zeitspanne, während der Wasser kontinuierlich durch das Rohr strömen sollte, und
der Sender (34) dazu ausgelegt ist, für den Fall, dass bestimmt wird, dass ein Strom an die wasserverbrauchende Einrichtung (23) für die vorbestimmte Zeitspanne kontinuierlich erfolgt ist, ein Alarmsignal zu senden.

12. System nach einem der vorhergehenden Ansprüche, wobei die Vielzahl von energieverbrauchenden Wassereinrichtungen wenigstens eine wasserverbrauchende Einrichtung (23) aufweisen, die aus einem Wasserspeiserohr (15a) versorgt wird, und wobei
die ersten Prozessormittel (31) dazu ausgelegt sind, den aktuellen Volumenstrom durch das Rohr (15a) während einer vorbestimmten Zeitspanne zu bestimmen und den so bestimmten Volumenstrom für die vorbestimmte Zeitspanne mit einem Referenzvolumenstrom für dieselbe vorbestimmte Zeitspanne zu vergleichen, und
der Sender (34) dazu ausgelegt ist, für den Fall, dass der bestimmte aktuelle Volumenstrom während der vorbestimmten Zeitspanne den Referenzvolumenstrom für dieselbe vorbestimmte Zeitspanne um einen ausgewählten Betrag überschreitet, ein Wartungssignal zu senden.

13. System nach Anspruch 12, wobei der Referenzvolumenstrom ein rollender Volumenstrommittelwert ist.

14. System nach Anspruch 12, wobei der Referenzvolumenstrom ein Standard-Volumenstrommittelwert ist.

15. System nach einem der Ansprüche 11 bis 14, wobei die Empfängermittel (40, 40N; 41) dazu ausgelegt sind, das Signal zu empfangen und das Signal bereitzustellen, so dass eine korrigierende Aktion vorgenommen werden kann.

16. System nach Anspruch 15, wobei die Empfängermittel aufweisen:
einen ersten Empfänger (40, 40N), der dazu ausgelegt ist, das Signal zu empfangen und neu zu senden, und
einen zweiten Empfänger (41), der dazu ausgelegt ist, das neugesendete Signal von dem ersten entfernten Empfänger zu empfangen und das Signal bereitzustellen, so dass eine korrigierende Aktion vorgenommen werden kann.

17. System nach einem der vorhergehenden Ansprüche, wobei der Sender (34) einen RF-Sender aufweist.

18. System nach Anspruch 16 in Kombination mit Anspruch 17,
wobei der erste Empfänger (40, 40N) aufweist
einen RF-Empfänger, der dazu ausgelegt ist, das von dem Sender (34) gesendete Signal zu empfangen, und
ein Telefon, das dazu ausgelegt ist, das Signal neu zu senden, und
wobei der zweite Empfänger (41) einen Telefonempfänger aufweist.

## Revendications

1. Système pour contrôler l'utilisation de l'énergie thermique dans des dispositifs à eau dans une unité individuelle d'un bâtiment à unités multiples dans lequel le bâtiment à unités multiples est alimenté en eau par une source commune (10) et dans lequel l'unité individuelle du bâtiment possède une pluralité de dispositifs à eau (23 ; 23a) consommant de l'énergie, chacun étant alimenté par une conduite (15a ; 17a) d'alimentation en eau alimentée à partir de ladite source commune (10), comprenant :
un moniteur (19/M) relié à la conduite (15a ; 17a) d'alimentation de chaque dispositif à eau (23 ; 23a), chaque moniteur comprenant une structure unitaire qui comprend son propre débitmètre (24, 26, 28, 29), son propre capteur thermique (32), son propre premier moyen de processeur (31), sa propre minuterie (33) et son propre émetteur (34),
le débitmètre (24, 26, 28, 29) étant agencé pour mesurer le débit volumétrique dans la conduite (15a ; 17a) d'alimentation associée et pour fournir un décompte des unités volumétriques successives qui se sont écoulées dans la conduite d'alimentation,
le capteur thermique (32) étant agencé pour mesurer la température des unités volumétriques successives qui se sont écoulées dans cette conduite d'alimentation,
le premier moyen de processeur (31) étant agencé pour calculer, en multipliant le débit volumétrique mesuré par la température, la teneur en énergie thermique de chacune des unités volumétriques successives,
l'émetteur (34) étant agencé pour transmettre, périodiquement sous le contrôle de la minuterie (33), les données traitées par le premier moyen de processeur (31) comprenant le total de la teneur calculée en énergie thermique des unités volumétriques successives et les données d'identification du dispositif,
le système comprenant en outre un moyen de réception (40 ; 40N ; 41) situé à distance des moniteurs et agencé pour recevoir les données transmises périodiquement, et comprenant un moyen de processeur supplémentaire agencé pour calculer, à partir des données reçues des moniteurs, l'énergie thermique totale consommée par les dispositifs à eau (23 ; 23a) de l'unité individuelle du bâtiment sur une période de temps sélectionnée.

2. Système selon la revendication 1, dans lequel ladite pluralité de dispositifs à eau consommant de l'énergie comprend au moins un dispositif (23) consommant de l'eau chaude alimenté par une conduite (15a) d'alimentation en eau chaude avec un moniteur (19/M) relié à celle-ci.

3. Système selon la revendication 1 ou 2, dans lequel ladite pluralité de dispositifs à eau consommant de l'énergie comprend des dispositifs (23a) de chauffage ou de refroidissement possédant chacun, en plus d'une conduite (17a) d'alimentation en eau et d'un moniteur (19/M) relié à celle-ci, une conduite (18a) de retour d'eau possédant un autre dit moniteur (19/M) relié à celle-ci, et dans lequel ledit moyen de réception (40, 40N) est agencé pour calculer une consommation totale en énergie thermique pour chaque dispositif (23a) de chauffage ou de refroidissement en soustrayant les données de teneur totale en énergie thermique de l'un desdits moniteurs des données de teneur totale en énergie thermique des autres dits moniteurs.

4. Système selon la revendication 3, dans lequel ledit moyen de réception comprend
un premier récepteur (40) agencé pour recevoir les données de teneur totale en énergie thermique de chacun desdits moniteurs de chaque dispositif (23a) de chauffage ou de refroidissement et pour retransmettre périodiquement les données d'énergie thermique, et
un deuxième récepteur (40N ; 41) agencé pour recevoir les données d'énergie thermique dudit premier récepteur (40), et présenter la consommation totale en énergie thermique des dispositifs (23a) de chauffage ou de refroidissement pour l'unité individuelle du bâtiment.

5. Système selon la revendication 4, dans lequel ledit premier récepteur (40, 40N) comprend ledit moyen de processeur supplémentaire agencé pour calculer la consommation totale en énergie thermique des dispositifs (23a) de chauffage ou de refroidissement pour l'unité individuelle du bâtiment pour ladite période de temps sélectionnée, et dans lequel ladite consommation totale en énergie thermique pour l'unité individuelle du bâtiment comprend les données d'énergie thermique transmises par ledit premier récepteur à distance (40, 40N) audit deuxième récepteur (41).

6. Système selon la revendication 4, dans lequel ledit deuxième récepteur (41) comprend ledit moyen de processeur supplémentaire agencé pour calculer la consommation totale en énergie thermique des dispositifs (23a) de chauffage ou de refroidissement pour l'unité individuelle du bâtiment pour ladite période de temps sélectionnée, et dans lequel lesdites données de teneur totale en énergie thermique pour chaque moniteur comprennent les données de teneur en énergie thermique transmises par ledit premier récepteur à distance (40, 40N) audit deuxième récepteur à distance (41).

7. Système selon l'une quelconque des revendications précédentes, comprenant en outre des moyens agencés pour calculer un tarif pour l'énergie thermique totale consommée par les dispositifs à eau (23 ; 23a) de l'unité individuelle du bâtiment.

8. Système selon la revendication 7, comprenant en outre des moyens agencés pour préparer une facture pour l'unité individuelle du bâtiment pour ledit tarif de consommation totale en énergie thermique.

9. Système selon la revendication 8, comprenant en outre des moyens agencés pour envoyer ladite facture à l'unité individuelle du bâtiment pour ledit tarif de consommation totale en énergie thermique.

10. Système selon la revendication 4 en combinaison avec la revendication 9, dans lequel ledit deuxième récepteur (40N, 41) est agencé pour calculer ledit tarif de consommation d'énergie thermique et pour préparer et envoyer ladite facture à l'unité individuelle du bâtiment pour ledit tarif de consommation totale en énergie thermique.

11. Système selon l'une quelconque des revendications précédentes, dans lequel la pluralité de dispositifs à eau consommant de l'énergie comprend au moins un dispositif (23) consommant de l'eau alimenté par une conduite (15a) d'alimentation en eau, et dans lequel :
le premier moyen de processeur (31) est agencé pour déterminer que le débit volumétrique dans la conduite (15a) a été continu pendant une période de temps prédéterminée, sélectionnée pour être supérieure à une période de temps pendant laquelle l'eau doit s'écouler en continu dans ladite conduite, et dans lequel
l'émetteur (34) est agencé pour transmettre un signal d'alarme dans l'éventualité où il serait déterminé que le débit allant vers ledit dispositif (23) consommant de l'eau a été continu pendant ladite période de temps prédéterminée.

12. Système selon l'une quelconque des revendications précédentes, dans lequel la pluralité de dispositifs à eau consommant de l'énergie comprend au moins un dispositif (23) consommant de l'eau alimenté par une conduite (15a) d'alimentation en eau, et dans lequel :
le premier moyen de processeur (31) est agencé pour déterminer le débit volumétrique actuel dans la conduite (15a) pendant une période de temps prédéterminée, et pour comparer le débit volumétrique déterminé pour ladite période de temps prédéterminée avec un débit volumétrique de référence pour ladite même période de temps prédéterminée, et dans lequel
ledit émetteur (34) est agencé pour transmettre un signal de maintenance dans l'éventualité où ledit débit volumétrique actuel déterminé pendant ladite période de temps prédéterminée dépasserait ledit débit volumétrique de référence pour ladite même période de temps prédéterminée selon une valeur sélectionnée.

13. Système selon la revendication 12, dans lequel ledit débit volumétrique de référence est une moyenne mobile du débit volumétrique.

14. Système selon la revendication 12, dans lequel ledit débit volumétrique de référence est une moyenne standard du débit volumétrique.

15. Système selon l'une quelconque des revendications 11 à 14, dans lequel le moyen de réception (40, 40N ; 41) est agencé pour recevoir ledit signal et présenter le signal, de telle sorte qu'une action corrective puisse être mise en oeuvre.

16. Système selon la revendication 15, dans lequel ledit moyen de réception comprend
un premier récepteur (40, 40N) agencé pour recevoir et retransmettre le signal, et
un deuxième récepteur (41) agencé pour recevoir le signal retransmis par ledit premier récepteur à distance et présenter ledit signal, de telle sorte qu'une action corrective puisse être mise en oeuvre.

17. Système selon l'une quelconque des revendications précédentes, dans lequel ledit émetteur (34) comprend un émetteur RF.

18. Système selon la revendication 16, en combinaison avec la revendication 17,
dans lequel ledit premier récepteur (40, 40N) comprend
un récepteur RF agencé pour recevoir le signal transmis par ledit émetteur (34), et
un téléphone agencé pour retransmettre le signal, et dans lequel
ledit deuxième récepteur (41) comprend un récepteur téléphonique.
